# EUROPEAN PATENT SPECIFICATION

(11) **EP 3 281 828 B1**
(45) Date of publication and mention of the grant of the patent: **15.01.2020**
(21) Application number: 15888378.5
(22) Date of filing: 03.07.2015
(51) Int. Cl.: B60S 3/06, A46B 7/08, A46B 13/00, A46B 17/02

(54) **COUPLING PART FOR ROTARY BRUSHES**
KUPPLUNGSTEIL FÜR DREHBÜRSTEN
PIÈCE D'ACCOUPLEMENT POUR BROSSES ROTATIVES

(30) Priority: 09.04.2015 ES 201530404 U
(43) Date of publication of application: 14.02.2018
(73) Proprietor: Antecuir S.L., 03830 Muro de Alcoy (Alicante) (ES)
(72) Inventor: BOTELLA, Francisco Rafael, 46870 Ontinyent (Valencia) (ES); AGULLÓ SOLER, Rafael, 03820 Cocentaina (Alicante) (ES); CARCHANO REIG, Vicente, 03810 Benilloba (Alicante) (ES)
(74) Representative: Martin Alvarez, Juan Enrique
(86) International application number: PCT/ES2015/070520
(87) International publication number: WO 2016/162578

(56) References cited:
- EP-A1- 2 351 674
- WO-A1-2007/121541
- US-A- 2 970 333
- US-A- 2 978 725
- US-A- 4 018 014
- US-A- 6 035 482

## Description

### Invention technical field

The present invention describes coupling parts or attachments for rotary brushes that are coupled to a rotational shaft or shank. The invention describes the brushes formed by the coupling parts and the corresponding bristles. Finally, the invention describes a brush located on a rotational shaft.

### Background to the invention

Currently, rotary brushes for cleaning or washing machines or for other purposes comprise a series of modules that support bristles, bands, strips or fringes, at the same time these modules are coupled to a shank that rotates driven by a motor.

There are several kinds of these modules:
- In a single part, thus not being possible to replace the segments or strips individually. This is technically and environmentally an important problem, EP 1962639 B1 or WO 2008032344 A1.
- Formed by two parts, thus having the possibility of replacing and combining the segments. The drawback is the complexity and difficulty of repairs or module and bristle replacements, which require long time with the significant economic cost and the need to call in the technical services, WO 02010061029, EP 0753274, EP 0965288, EP 1213984 or ES 2208429.
- The modules formed by a single part and with the bristles stitched on are relatively easy to replace, but they are expensive and have poor reliability in the washing process and in the availability of spares, not being able to replace the bristles separately, EP 0193695, EP 0245578, ES 1006022, EP 1584441 or FR 2868729.
- Modules in a single part with the bristles, segments or filaments stapled on present great problems both technically and environmentally, similar to the previous case, FR2815523.

ES 2183459 describes a coupling attachment for brushes with a central shaft. The described system allows replacing the bristles of the support but it is necessary to dismantle or remove the rotational shaft to replace the coupling attachment.

US 2970333 describes a rotary brush comprising two semi-cylinders that couple to each other through a screw connection to the shaft. The cylinders function as a support to the bristles and they can be replaced without removing the shaft from the machine. However, the coupling of the bristles to the cylinders comprises a dovetail system and, therefore, to assemble or remove them it is necessary to dismantle the support and remove the bristles by a sliding movement, because the coupling attachments are pressure-fit connected.

The closest prior art document is WO 2007121541 and describes a coupling attachment formed by two non-superimposable mirror image parts that comprise a toothed inner perimeter to attach the band-shaped bristles to the shaft by pressure-fit. In order to replace the bristles it is necessary to dismantle the non-superimposable mirror image parts from the rotational shaft. This coupling system does not allow the use of filament bristles.

The coupling attachments for brushes described in the state-of-the-art are suitable only for one type of bristle only, i.e., either for filament bristles or for segment-shaped bristles or for band-shaped bristles. No coupling attachment found in the state-of-the-art allows the combination of different bristle types. The coupling attachments for brushes described in the state-of-the-art allow the use of 10 to 12 strips or bands of bristles.

### Object of the invention

The problem solved by the invention is to find a coupling system for bristles (filaments, bands, strips segments, fringes) that allows their replacement without having to dismantle the rotational shaft or the coupling attachment(s) and suitable for any machine, thus reducing costs and the environmental impact.

Another problem solved by the invention is to find a coupling attachment suitable for any bristle type: filaments, bands, segments, fringes.

Another problem solved by the invention is to enable interchangeability of different bristle types in a single coupling attachment and to secure the bristles without a pressure fit, which facilitates replacement.

The solution found by the inventors is a coupling attachment conformed by a round section part wherein its inner perimeter comprises temporary securing means for bristles and the round section part is configured by semi-circular non-superimposable mirror image parts coupled together by a male-female connection system.

The temporary securing means for bristles comprise hooks. The mentioned configurations allow the rapid replacement of segments and bristles without having to dismantle the coupling system from the shaft. The coupling system allows assembling the bristles without pressure fitting.

The mentioned configuration allows an increase in the number of bristles of the brush and the combination of different bristles types, be it of the same material or of different material, without removing the coupling attachment from the shaft. When combining different bristle types, the system may be used for other purposes: to dry, to polish, to massage animals, to scrape, to shine besides from cleaning or washing.

The temporary securing means allow the use of any type of bristles: single bristles, filaments, stripes, bands or segments.

Preferably, the bristles are made of flocked material that optimises the washing or cleaning procedure, imparting more shine, increasing the removal of dry dirt, such as bird excrements or mosquitos, reducing noise during the cleaning process, and reducing the amounts of water and detergents used.

### Description of the figures

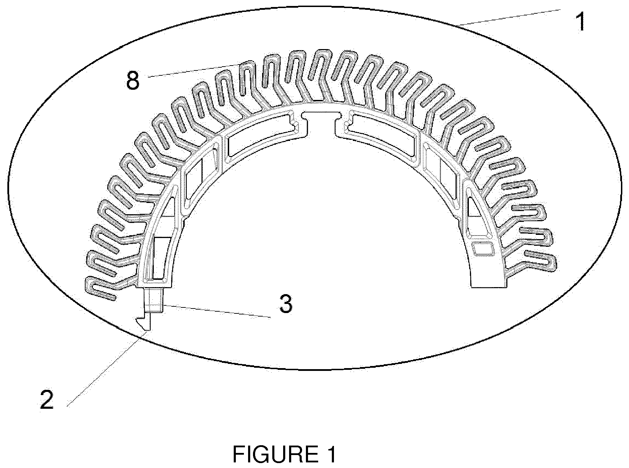

Figure 1 shows a non-superimposable mirror image semi-circular part comprising temporary securing means and male-female coupling means.
Figure 2 shows two non-superimposable mirror image semi-circular parts in coupling process to form a round coupling attachment for brushes.
Figure 3 shows the two coupling semi-circular parts joined and forming the round coupling attachment for brushes.
Figure 3.1 shows the union of two coupling parts when they are joined with a detail of the point of union.
Figure 4 shows the details of the different anchoring points of the coupling attachment.
Figure 5 shows different configurations of the bands.
Figure 5.1 shows a textile band with two holes.
Figure 5.2 shows a foam band.
Figure 5.3 shows a textile band with a hole.
Figures 6 and 15 show two configurations of the band unions.
Figure 7 shows a removable key and the corresponding groove.
Figure 8 shows the coupling attachment and the brush coupled to it.
Figure 9 shows details of the coupling attachments.
Figure 10 shows the clamp for securing to the shaft.
Figure 11 shows details of the coupling attachment and the clamp.
Figure 12 shows the rotational shaft with the coupling attachment and the clamps.
Figure 13 shows a comb comprising a support with holes and bristles.
Figure 14 shows a union part for bands.

### Description of the invention

The term bristles refers to proper bristles, filaments, bands or segments suitable for cleaning, brushing, shining, drying, polishing or scraping.

The term brush refers to a support with bristles.

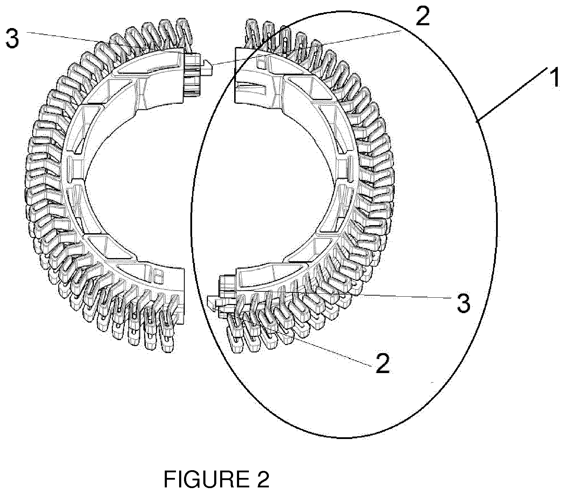

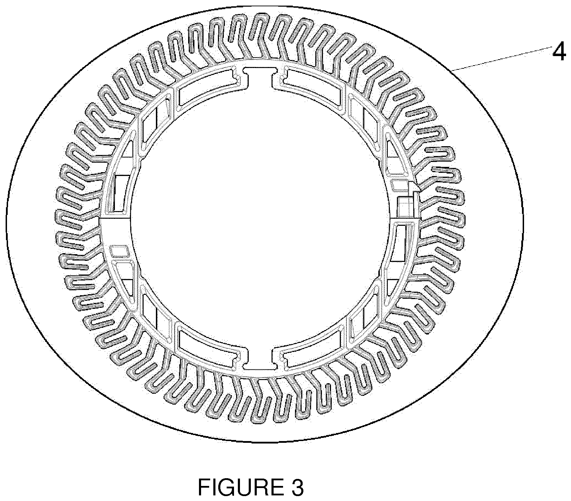

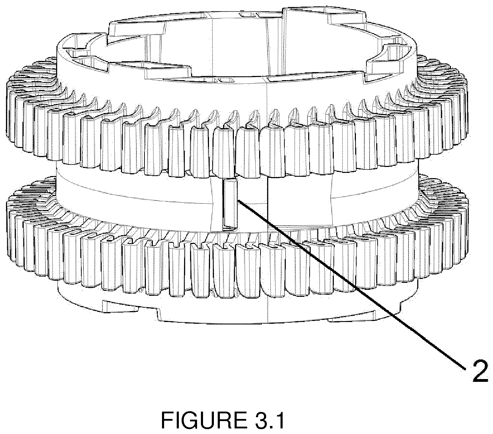

The coupling attachment (4) described before is configured by two non-superimposable mirror image parts (1) joined together that couple to each other by a male-female connection system (2, 3) as shown in Figures 2, 3.

The male-female coupling system allows coupling and decoupling the non-superimposable mirror image parts (1) easily. The male-female connecting means are known to the skilled person: nut and bolt, clips, etc. Preferably, the connection system between the non-superimposable mirror image parts (1) is with a catch-anchoring system, as detailed in figure 3.1.

The coupling attachment described allows replacing the coupling system without having to dismantle the rotational shaft and the system remains secured to the shaft with the catch-anchoring feature.

The non-superimposable mirror image parts (1) present around their perimeter area temporary securing means for the bristles, i.e., means that allow securing the bristles to the coupling attachment without using tools, securing them without pressure, without exerting force and manually. The temporary securing means are hooks (8). Figure 3 shows a non-superimposable mirror image part with 56 hooks suitable to secure bristles of different kinds and to increase the density in bristle number. Thus, the bristles may have filament shape (14) or band shape (6, 12). The skilled person in the field, depending on the application, may modify the number of hooks, but, in any case, the bristles' number fitted in the non-superimposable mirror image part is higher than those described in the state-of-the-art.

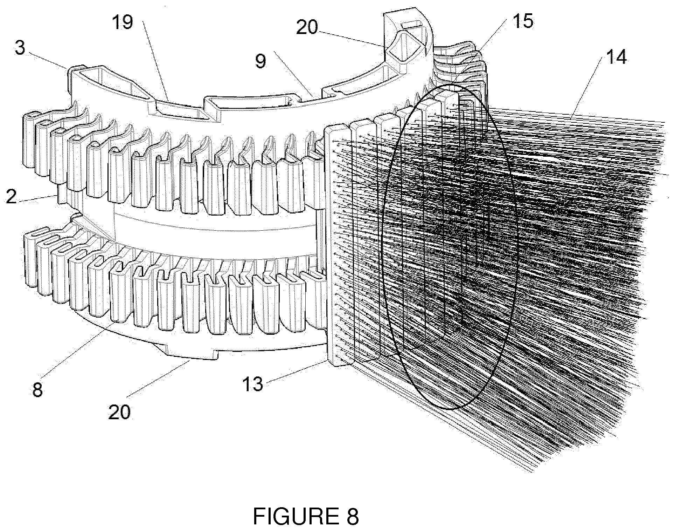

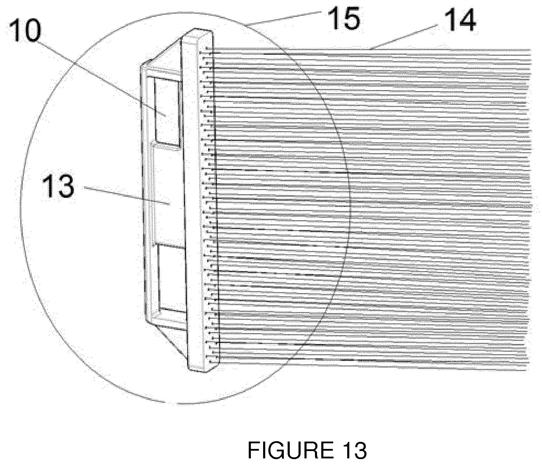

When the bristles are in the shape of filaments, they are secured to the coupling attachment by the use of a comb (15), as detailed in Figure 13 and Figure 8. The filaments' length may be between 200 and 600 millimetres.

The comb (15) is formed by a support (13) with holes (10) and by the filament-shaped bristles (14). The holes (10) are inserted in the hooks (8) and the brush is secured to the coupling attachment. The filaments' (14) fitting to the supports may be carried out by any method known by the skilled person, in a preferred way it is carried out by thermo-welding.

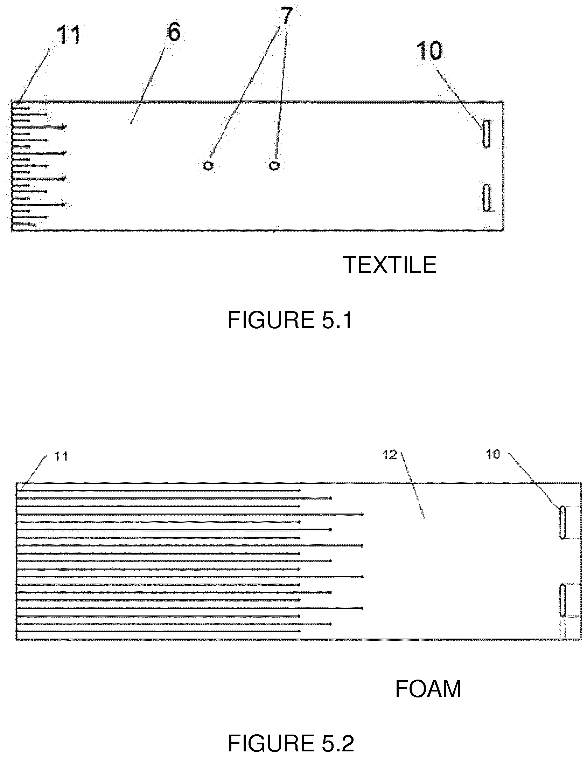

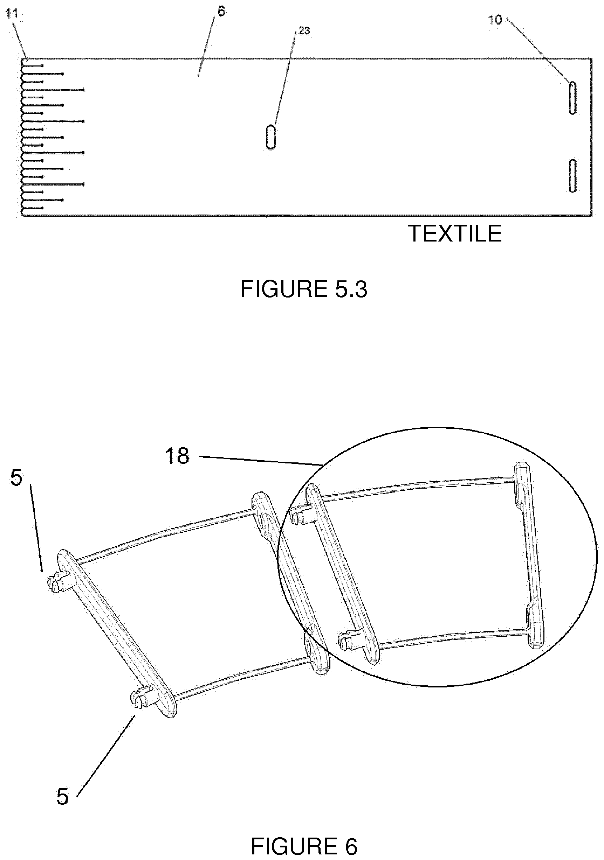

When the bristles are band-shaped (6, 12), they are joined to the coupling arrangement through the holes (10), according to Figures 5.0, 5.2 or 5.3. The bands (6, 12) may be fabricated with a textile material (6) or with a foamed material (12) and may present strips at their ends (11). The bands' dimensions may have a width between 80 and 200 millimetres and a length between 200 and 600 millimetres.

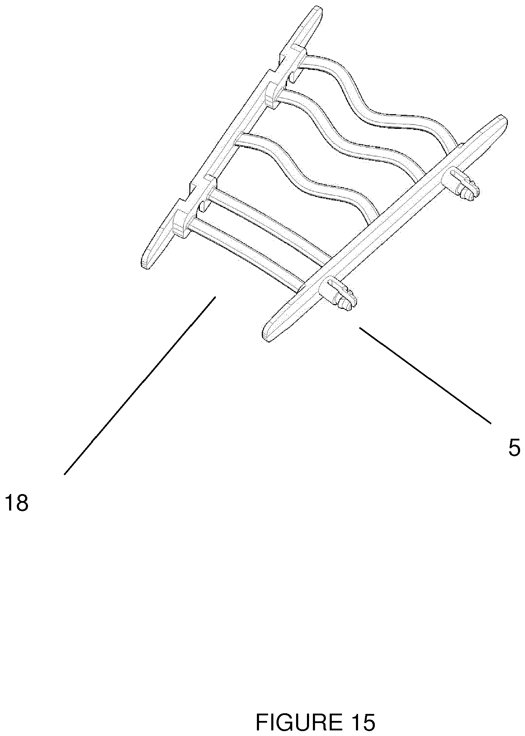

When the bristles are band-shaped (6), the band defines two holes (7) as detailed in Figure 5.1. The bands are joined to each other by the coupling of the parts (18) described in Figures 6 or 15. The bands remain clamped by the part (18), through the securing features (5) described in Figures 6 or 15, forming an eccentric round structure with respect to the coupling attachment. This configuration reduces the bristles' impact force with the objects to be washed and the generated noise.

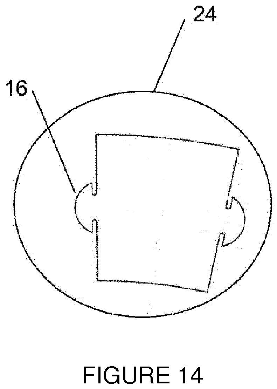

Another possible configuration is when the band defines a hole (23) in its central area. The hole's (23) functionality is to couple the plastic part (24) described in Figure 14 through a jigsaw-type connection (16), with two adjacent textile bands. This configuration also reduces the bristle's impact force with the objects to be washed and the generated noise.

As it can be seen, the described system allows replacement of faulty bristles without dismantling the rotational shank.

Depending on the use of the brushes, the skilled person may exchange and/or combine different bristle types without having to take the coupling attachment apart from the rotational shaft. The fitting means are compatible with any bristle type: natural filaments, synthetic filaments, bands, segments, textiles, paper, fibres, etc.

Another benefit of the described coupling attachment (4) is that it is suitable for any rotational shaft by just changing the part diameter.

The coupling attachment fitting to the rotational shaft may be carried out in two ways:
- using a keyed union, or
- through the fitting of two coupling parts with a joining protrusion.

The keyed union has the drawback that the rotational shaft must define a keyseat, thus not being a universal solution.

The described coupling attachment is indeed a universal solution that allows using the coupling attachment in any shaft, irrespectively of having a keyseat, forming a closed neck closure joined by the ends.

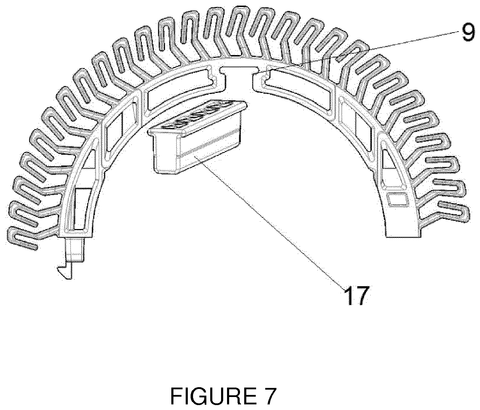

In the event that the rotational shaft has a keyseat, the coupling attachment comprises a removable key. Figure 7 shows an embodiment that includes a keyseat (9) and a removable key (17). In the event that the rotational shaft has no keyseat, the removable key (17) is withdrawn.

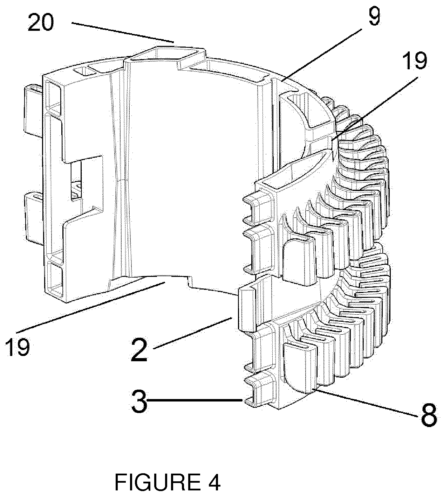

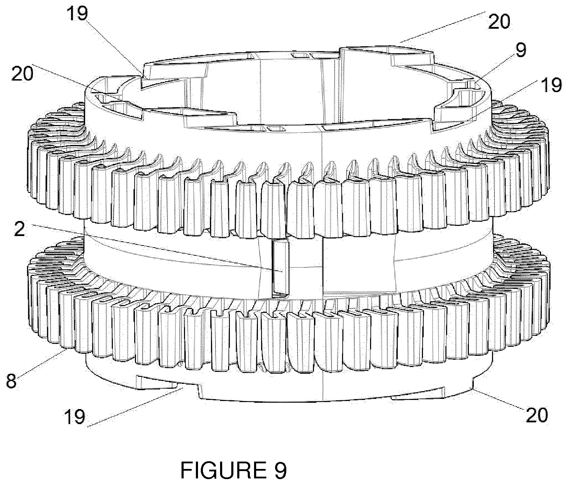

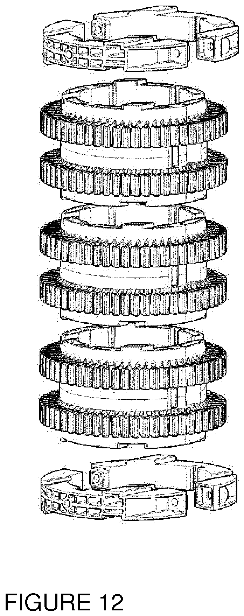

The coupling parts (4) may be coupled to each other as shown in Figure 12. To couple different parts, the coupling part defines protrusions (20, Figures 4, 8, 9) and recesses (19, Figures 4, 8, 9) for the successive coupling of the parts to a rotational shaft.

Despite the fact that the fitting of the coupling parts (4) to the rotational axis is optimal, this may be improved by adding clamps to the shaft ends, as shown in Figure 12.

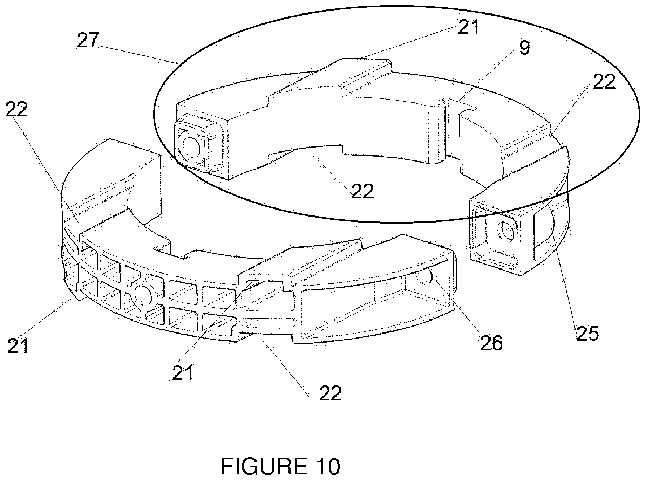

The clamp shown in Figure 10 is formed by two non-superimposable mirror image semi-circular parts (27) which include protrusions for the hitch (21) and recesses for the other hitch (22) to the coupling parts (4). The clamp defines holes (26 and 25) suitable for nuts and bolts for joining the non-superimposable mirror image parts (27).

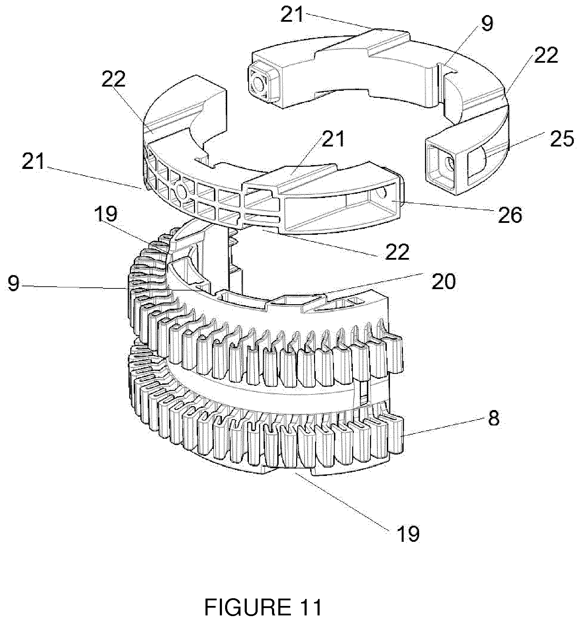

The clamp is coupled with the coupling parts (4) as detailed in Figure 11 through the coupling: between the coupling part recesses (19) and the clamp protrusions (21) and between the coupling part protrusions (20) and the clamp recesses (22).

The coupling attachment may be made of any plastic material. The coupling attachment's diameter may be adjusted to the rotational shaft's diameter.

Preferably, the bristles are made of a flocked material.

The flocked material may be:
- a laminated substrate or bands in which the flocking is carried out; or
- flocked filaments

The substrate may be of any nature: woven or non woven. The substrate is covered with a resin at both sides and fibres of different thickness and width are deposited on the substrate. The fibres' thickness may be between 0.3 dtex and 44 dtex. The fibres' length may be between 0.3 and 20 mm. Finally, the flocked fabric is cured in an oven.

The flocked filaments may be obtained in a similar manner from a continuous polyester filament, acrylic filaments, viscose rayon or intimate mixtures of any of them.

Comparative studies using flocked and non-flocked fabrics were carried out. The band-shaped bristles' length used was 380 millimetres and the strips had a width of 5 millimetres.

The materials used were:
Non-woven fabric
Flocked fabric
Non-woven fabric with EVA foam
EVA foam
Polyethylene foam

The previous materials were compared with the same flocked materials. The fibres' length of the flocked materials was between 0.3 -20 millimetres and the fibres' thickness was between 0.3 dtex and 44 dtex.

The results obtained with the flocked fabrics were better than the results for the non-flocked materials, in particular:
- The water and neutral soap wash completely eliminated bird excrements and insect remains with the flocked textiles.
- After 100 washes with water, the flocked fabrics did not cause micro-scratches in the bodywork unlike the non-flocked fabrics.
- According to the subjective user's opinion an increase in the bodywork's shine took place compared with the non-flocked fabrics.
- The noise during the washing process was reduced. The polyethylene fibres and other usual materials make through the washing a noise louder than 60 decibels, with the flocked material the generated noise was less than 60 decibels.

The water amount in the washing was reduced. A washing cycle with non-flocked fabric used 150-200 water litres, whereas with the flocked material described this amount was reduced in between 30-40%.

## Claims

1. Coupling attachment for rotary brushes made up by a part with round section (4) configured by non-superimposable mirror image parts (1) coupled with a male-female coupling system (2, 3), said parts (1) **characterised by** comprising hooks as temporary securing means (8) for bristles (6, 12, 14) in their external perimeter

2. Coupling attachment for rotary brushes according to claim 1 **characterised by** it comprising 56 hooks.

3. Coupling attachment for rotary brushes according to any preceding claim **characterised by** the male-female coupling system (2, 3) comprising a catch-anchoring feature.

4. Coupling attachment for rotary brushes according to any preceding claim **characterised by** comprising a keyseat (9)

5. Coupling attachment for rotary brushes according to claim 4 **characterised by** comprising a removable key (17).

6. Coupling attachment for rotary brushes according to any of claims 1 to 5 **characterised by** it comprising at its ends recesses (19) and protrusions (20) to join the coupling parts to each other.

7. Brush formed by:
- a coupling attachment according to claims 1 to 6
- a comb (15) comprising
- a support (13) with holes (10) and
- bristles joined to the support (13).

8. Brush according to claim 7 **characterised by** the bristles being filaments (14).

9. Brush according to claims 7 **characterised by** the bristles being bands (6, 12) with holes (10).

10. Brush according to claim 9 **characterised by** the bands (6, 12) comprising strips (11).

11. Brush according to claims 9-10 **characterised by** the bands (6) defining holes (7, 23) in their central part and the adjacent bands being joined by parts (5, 16) that are introduced in the holes (7, 23).

12. Brush according to claims 7 to 11 **characterised by** their bristles (14, 12, 6) being fabricated with a flocked material.

13. Brush according to claim 12 **characterised by** the flocked material's thickness being 0.3-44 dtex and the flocking's length being 0.3-5 millimetres.

14. Brush according to claims 7-13 placed on a rotational shaft.

15. Coupling attachment according to claim 6 that comprises bristles (14, 12, 6) temporarily joined wherein said coupling attachment is placed on a rotational shaft together with a clamp formed by two non-superimposable mirror image semi-circular parts (27) that comprise:
- holes suitable for nut and bolt (25, 26)
- hitch protrusions (21) to fit with the coupling attachment (4),
- hitch recesses (22) to fit with the coupling attachment (4).

## Patentansprüche

1. Kopplungsaufsatz für Drehbürsten, bestehend aus einem Teil mit rundem Abschnitt (4), ausgebildet aus nicht deckungsgleichen spiegelbildlichen Teilen (1), gekoppelt mit einem Männlich/Weiblich-Kopplungssystem (2, 3), wobei die genannten Teile (1) **dadurch gekennzeichnet sind, dass** sie Haken als vorübergehende Sicherungsmittel (8) für Borsten (6, 12, 14) in deren Außenumfang umfassen.

2. Kopplungsaufsatz für Drehbürsten nach Anspruch 1, **dadurch gekennzeichnet, dass** er 56 Haken umfasst.

3. Kopplungsaufsatz für Drehbürsten nach einem vorhergehenden Anspruch, **dadurch gekennzeichnet, dass** das Männlich/Weiblich-Kopplungssystem (2, 3) eine Sperrung/Verankerung-Einrichtung umfasst.

4. Kopplungsaufsatz für Drehbürsten nach einem vorhergehenden Anspruch, **dadurch gekennzeichnet, dass** er einen Keilsitz (9) umfasst.

5. Kopplungsaufsatz für Drehbürsten nach Anspruch 4, **dadurch gekennzeichnet, dass** er einen entfernbaren Keil (17) umfasst.

6. Kopplungsaufsatz für Drehbürsten nach einem der Ansprüche 1 bis 5, **dadurch gekennzeichnet, dass** er an dessen Enden Aussparungen (19) und Vorsprünge (20) umfasst, um die Kopplungsteile miteinander zu verbinden.

7. Bürste gebildet aus:
- einem Kopplungsaufsatz nach den Ansprüchen 1 bis 6
- einen Kamm (15) umfassend
- eine Stütze (13) mit Löchern (10) und
- mit der Stütze (13) verbundene Borsten.

8. Bürste nach Anspruch 7, **dadurch gekennzeichnet, dass** die Borsten Filamente (14) sind.

9. Bürste nach den Ansprüchen 7, **dadurch gekennzeichnet, dass** die Borsten Bänder (6, 12) mit Löchern (10) sind.

10. Bürste nach Anspruch 9, **dadurch gekennzeichnet, dass** die Bänder (6, 12) Streifen (11) umfassen.

11. Bürste nach den Ansprüchen 9-10, **dadurch gekennzeichnet, dass** die Bänder (6) Löcher (7, 23) im mittleren Teil definieren und die benachbarten Bänder mittels Teile (5, 16) verbunden werden, welche in die Löcher (7, 23) eingeführt werden.

12. Bürste nach den Ansprüchen 7 bis 11, **dadurch gekennzeichnet, dass** deren Borsten (14, 12, 6) mit einem beflockten Material hergestellt werden.

13. Bürste nach Anspruch 12, **dadurch gekennzeichnet, dass** die Dicke des beflockten Materials 0,3-44 dtex ist und die Länge des beflockten Materials 0,3-5 Millimeter ist.

14. Bürste nach den Ansprüchen 7-13, welche auf einer Drehwelle platziert ist.

15. Kopplungsaufsatz nach Anspruch 6, welcher vorübergehend verbundene Borsten (14, 12, 6) umfasst, wobei der genannte Kopplungsaufsatz auf einer Drehwelle zusammen mit einer Klemme platziert ist, welche aus zwei nicht deckungsgleichen spiegelbildliche halbkreisförmigen Teilen (27) gebildet ist, welche Folgendes umfassen:
- Löcher, welche für Schraube und Mutter (25, 26) geeignet sind,
- Anschlussvorsprünge (21), um mit dem Kopplungsaufsatz (4) eingefügt zu werden,
- Anschlussaussparungen (22), um mit dem Kopplungsaufsatz (4) eingefügt zu werden.

## Revendications

1. Accouplement pour brosses rotatives constitué d'une pièce ayant une section ronde (4) configurée par des pièces en image miroir non superposables (1) accouplées avec un système d'accouplement mâle-femelle (2, 3), lesdites pièces (1) étant **caractérisées en ce qu'**elles comprennent des crochets en tant que moyens de fixation temporaire (8) pour des poils (6, 12, 14) dans leur périmètre externe.

2. Accouplement pour brosses rotatives selon la revendication 1, **caractérisé en ce qu'**il comprend 56 crochets.

3. Accouplement pour brosses rotatives selon l'une quelconque des revendications précédentes, **caractérisé en ce que** le système d'accouplement mâle-femelle (2, 3) comprend un élément de prise-ancrage.

4. Accouplement pour brosses rotatives selon l'une quelconque des revendications précédentes, **caractérisé en ce qu'**il comprend une rainure de clavette (9).

5. Accouplement pour brosses rotatives selon la revendication 4, **caractérisé en ce qu'**il comprend une clavette amovible (17).

6. Accouplement pour brosses rotatives selon l'une quelconque des revendications 1 à 5, **caractérisé en ce qu'**il comprend à ses extrémités des évidements (19) et des saillies (20) pour unir les pièces d'accouplement les unes aux autres.

7. Brosse formé par
- un accouplement selon les revendications 1 à 6
- un peigne (15) comprenant
- un support (13) avec des trous (10) et
- des poils unis au support (13).

8. Brosse selon la revendication 7, **caractérisée en ce que** les poils sont des filaments (14).

9. Brosse selon la revendication 7, **caractérisée en ce que** les poils sont des rubans (6, 12) avec des trous (10).

10. Brosse selon la revendication 9, **caractérisée en ce que** les rubans (6, 12) comprennent des lanières (11).

11. Brosse selon les revendications 9-10, **caractérisée en ce que** les rubans (6) définissent des trous (7, 23) dans leur partie centrale et les rubans attenants sont unis par des pièces (5, 16) qui sont introduites dans les trous (7, 23).

12. Brosse selon les revendications 7 à 11, **caractérisée en ce que** ses poils (14, 12, 6) sont fabriqués avec un matériau de flocage.

13. Brosse selon la revendication 12, **caractérisée en ce que** l'épaisseur du matériau de flocage est de 0,3-44 dtex et la longueur du matériau de flocage est de 0,3-5 millimètres.

14. Brosse selon les revendications 7-13 mise en place sur un arbre de rotation.

15. Accouplement selon la revendication 6, qui comprend des poils (14, 12, 6) unis temporairement dans lequel ledit accouplement est mis en place sur un arbre de rotation conjointement avec une pince formée de deux pièces semi-circulaires en image miroir non superposables (27) qui comprennent :
- des trous appropriés pour boulon et écrou (25, 26),
- des saillies d'attelage (21) pour s'adapter à l'accouplement (4),
- des évidements d'attelage (22) pour s'adapter à l'accouplement (4).
